# EUROPEAN PATENT SPECIFICATION

(11) **EP 0 579 627 B1**
(45) Date of publication and mention of the grant of the patent: **08.11.1995**
(21) Application number: 92907043.1
(22) Date of filing: 23.03.1992
(51) Int. Cl.: H02G 7/00

(54) **A DEVICE FOR ACHIEVING VISUAL MARKING OF A LINE OR WIRE**
EINRICHTUNG ZUR POSITIONSANGABE VON EINER LEITUNG ODER EINEM KABEL
DISPOSITIF POUR FOURNIR UN REPERE VISUEL D'UNE LIGNE OU D'UN CABLE

(30) Priority: 09.04.1991 SE 9101035; 20.09.1991 SE 9102734; 20.12.1991 SE 9103788
(43) Date of publication of application: 26.01.1994
(73) Proprietor: SAAB Helikopter Aktiebolag, 611 27 Nyköping (SE)
(72) Inventor: SEGERSTRÖM, Bo, Torbjörn, S-640 32 Malmköping (SE)
(74) Representative: Lundquist, Arne
(86) International application number: PCT/SE92/00177
(87) International publication number: WO 92/19033

(56) References cited:
- EP-A- 0 418 751

## Description

This invention relates to a device for achieving visual marking of a line or wire, especially a substantially horizontal ground wire in a transfer system for high voltage electricity, arranged at a relatively high altitude above the ground.

There is a need for marking lines, arranged at a more or less high altitude above the ground, visually, that is to say with marking bodies, in order to make these lines visible for air vehicles like aircraft and helicopters. Telephone lines, supporting steel wires etc. may be mentioned. Firstly, lines and wires of the type mentioned introductorily are considered.

EP-A-0 418 751 discloses a device for placing marker balls on wires. The device stores two sets of hemispherical shells and uses jacks to force each pair of hemispheres together. The hemispheres have cooperating edges which snap together.

Until now it has been very expensive to clamp up such marking bodies on lines arranged at a high altitude. This is especially true for ground wires for transfer systems for 400 kV or 800 kV electricity, which in many cases comprise wires in rough terrain or over sea bays, fiords and lakes.

The object of the present invention is therefore to achieve a device of the type mentioned introductorily that is inexpensive and simple but also safe in utilization. The object is also to achieve a reliable method of achieving visual marking.

According to the invention a device of the type mentioned introductorily is characterized primarily by the combination of features defined in claim 1.

The shell may be formed in many ways, from plates of different form and size to space bodies of arbitrary form, but especially as symmetrically closed bodies, built by a shell, like spheres of different dimensions. It is especially suitable to form the shell as a sphere, divided into two substantially identical hemispheres.

Considering the difficulty to hold the device in a correct position relative to the line or wire, especially in hard wind, it is suitable to provide the fastening device or carrying means with indicating means for indicating the correct position of the fastening device relative to the line or wire for the clamping elements cooperatingly to grasp the line. The indicating means may consist of two contact elements or sensors situated at a horizontal distance from each other, so arranged that upon simultaneous contact with the line, they give a corresponding signal. This embodiment is especially suitable in those cases, when, in said second position of the clamping elements, the carrying means is released from the fastening device upon an impulse from an operator, who observes the signal. It is also possible to design the device so that the signal gives an impulse for automatic release of said carrying means from the fastening device.

Within the scope of the invention, there are many constructional possibilities to bring the clamping elements in a fastening grip of the line, and to release the fastening device from the carrying means.

In one embodiment, the fastening device comprises a first frame portion, which in its lower part is formed as a first clamping element, and a first link arm, in the form of a yoke, pivoted in said first frame portion, the yoke being formed on the inside as a second clamping element. The first link arm, at its portion turned away from the second clamping element, is attached at a relatively strong spring means, which pretensions said clamping elements towards said second position in which they grasp the line or wire fasteningly, but are kept in said first position by a link arrangement, which when touching the line releases said first link arm, so that the clamping elements go to their second position.

In this embodiment, it is suitable to arrange the carrying means fastened releasably at the fastening device, in the first position locked by a protrusion on the first link arm, and in the second position released from the fastening device.

If the shell is formed like a sphere, divided into two hemispheres, this embodiment may be designed in a simple way, so that these hemispheres are kept apart in said first position, but are closed together in said second position. This can be achieved through one hemisphere being fastened in the fastening device and the second hemisphere being pivoted, at its upper portion, in the fastening device. In the first position, the second hemisphere is kept swung out by the first link arm via the second link arm, from the first hemisphere. In the second position, the first link arm, via the second link arm, brings the hemispheres to close together.

Considering the difficulties to place the device in the correct position above the line in question, it is suitable to connect the carrying means to at least two, preferably four guide bars, provided to guide the fastening device to the correct position relative to the line, when the device is approaching the line, for the clamping elements to grasp the line fasteningly, cooperatingly.

The embodiment with a relatively strong spring that brings the clamping elements to get into said second position, fasteningly grasping the line, may have certain limitations. Considering the force needed between the clamping elements, it demands a strong spring means and correspondingly a strong construction of the fastening device and the first link arm, which means a relatively heavy construction. In an alternative embodiment of the device according to the invention, said fastening device therefore comprises a second frame portion, carrying a first clamping element, preferably formed as a profile piece, for grasping part of the circumference of the line, further comprising a third frame portion, carrying a second clamping element, formed like the first clamping element, a turnable shaft being provided, which through turning by a turning means, brings both frame portions together, so that the clamping elements, from each side, cooperatingly grasp the line, fastening it.

As it is important that the clamping elements are pressed to the line with a predetermined force, it is suitable to provide the turnable shaft with torque limiting means, preferably in the form of an axially limited rotation symmetrical diminishing of the diameter of the shaft.

Mainly, electric motors are preferred as driving means. As there is a demand to fasten the marking body quickly to the line or wire, it is advantageous to design the turning means so that it turns the turnable shaft with a relatively high first speed of rotation and low torque, and thereupon turns this shaft with a relatively low second speed of rotation and high torque.

The turning means may, per se, be attached to the fastening means, but it is more economical to put it in carrying connection with the carrying means, releasable from the turnable shaft by a link arrangement, in said second position of the clamping elements. In this way one and the same turning means can be utilized for fastening all present marking bodies.

When a line or wire shall be marked visually with marking bodies, it is important that these are fastened at correct distances from each other. One method of achieving this is to designate the positions for fastening the marking bodies by a reference carriage, which is provided with driving wheels and its own driving means for displacement along a line, the reference carriage being arranged to be started by a wirelessly transferred impulse, e.g. by IR radiation. In a suitable embodiment, the reference carriage is brought to move a predetermined distance along the line on a transferred impulse.

The invention will now be described in more detail with reference to the accompanying figures.

On these,
- figure 1: shows one embodiment of a device according to the invention, in a view from one side, partly in section,
- figure 2: shows an enlargement of a part of a fastening device in figure 1,
- figure 3: shows an alternative embodiment of a device according to the invention, in perspective,
- figure 4: shows an additional embodiment of a device according to the invention, in perspective, and
- figure 5: shows an enlargement of a part of the fastening means and the carrying means in figure 4, and
- figure 6: shows a reference carriage.

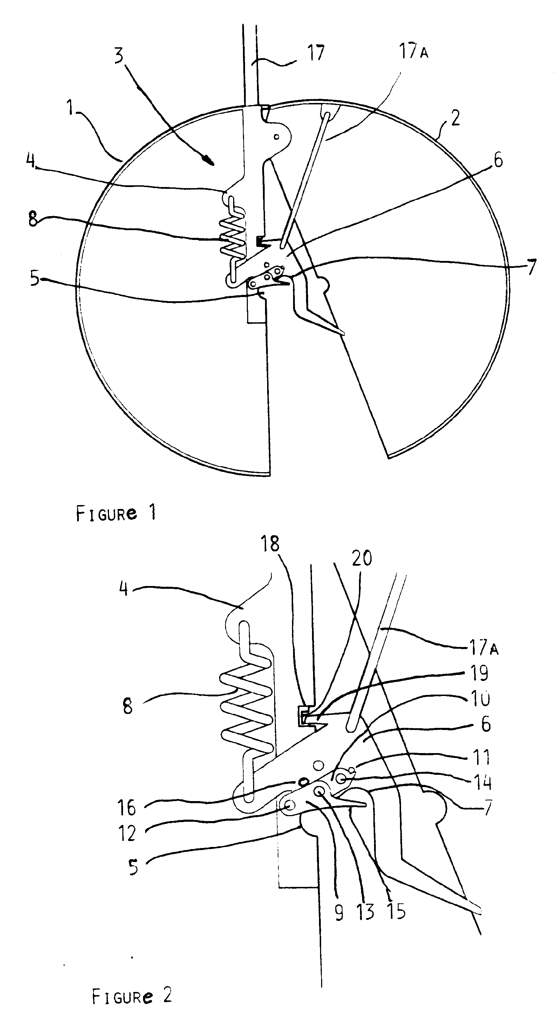

In figure 1, a first and a second hemisphere are denoted by 1 and 2, the first of which is attached to a fastening device 3, and the second of which is pivoted at its upper portion in the fastening device 3. The latter comprises a first frame portion 4, at its lower portion formed as a first clamping element 5, and a first link arm 6, in the form of a yoke, pivoted in said frame portion 4, the yoke being formed on the inside as a second clamping element 7. At its portion turned away from the second clamping element 7, the first link arm 6 is attached to a relatively strong spring means 8, in this case in the form of a screw spring, attached at the first frame portion 4. The spring means 8 pretensions the clamping elements 5, 7 towards said second position, that is to say the position in which the clamping elements can fasteningly grasp a line. The clamping elements 5, 7 are, however, kept in a first position, in which they may freely grasp the line, by a second link arm 9, pivoted in the first frame portion 4 at one end, and is pivoted in a third link arm 10, at the other end. The third link arm 10 is in turn pivoted in the first link arm 6. The dimension and arrangement of the three link arms 6, 9, 10 are such that, with a lock 11 for the turning movement of the third link arm 10 relative to the first link arm 6, the second and third link arms in a first position nearly form a straight line with their turning axes 12, 13, 14, the turning axis 13 between the first and second link arm being, however, located a little below a connecting line between the first and third turning axes 12, 14. In the present case, the second link arm 9 is provided with a protrusion 15, which, when being touched by the line, snaps over the second and third link arms, so that the spring means 8 can pull the clamping elements 5, 7 together. The first link arm 6 is so designed that it guides the line towards the clamping elements, if the line is located somewhat outside the correct position when the clamping elements 5, 7 are pulled together by the first link arm. Suitably, a releasable lock 16 is provided to prevent an unintentional snap of the second and third link arms 9, 10. Of course, this lock 16 has to be removed before the device is utilized. A fourth link arm 17 is arranged pivoted in the first link arm 6 and the upper portion of the second hemisphere 2, to pull the hemispheres together when the clamping elements get into their second position. A carrying means 17 in the form of a rod is placed in a corresponding channel in the first frame portion 4. A recess 18 in the first frame portion 4 admits that a protrusion 19 on the first link arm 6 is put in a recess 20 in the carrying means 17 in said first position, but releases it, and thereby the carrying means 17, from the fastening means 3 in the second position.

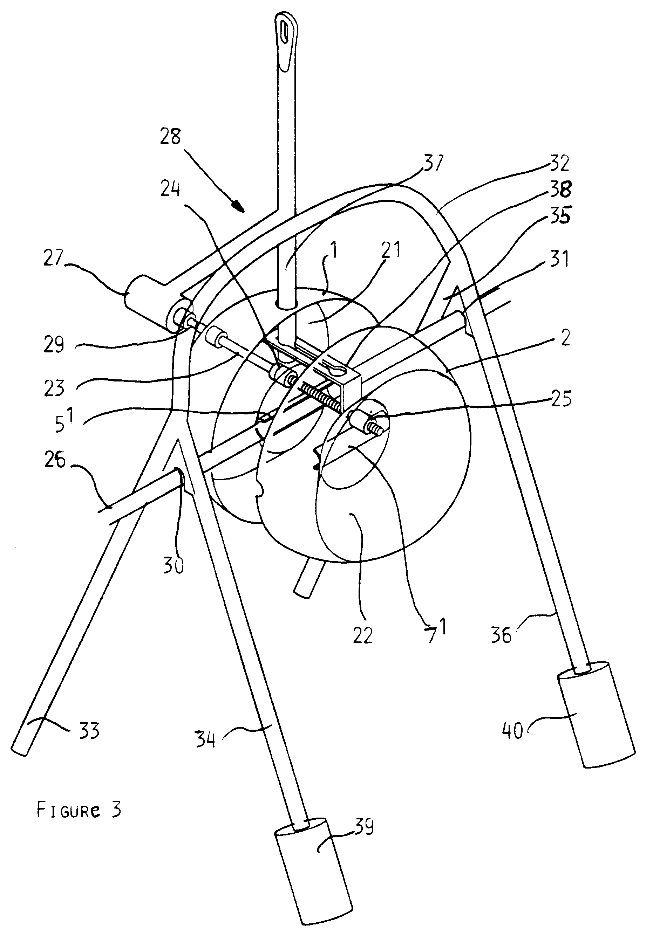

In figure 3, an alternative embodiment of the device according to the invention is shown. The fastening device here comprises a schematically shown second frame portion 21, which with a truncated conic support part supports a first hemisphere 1, and a first clamping element 5¹. A third frame portion 22 supports a second clamping element 7¹ and, via a truncated conic support part, a second hemisphere 2. A turnable shaft 23 is provided with threads, and corresponding sleeves 24, 25 are provided at the second and third frame portions 21, 22 enabling them to be pulled together when turning the shaft 23, so that the clamping elements 5¹, 7¹ can grasp a line 26, fasteningly, if this line is in the correct position. The shaft 23 is turned by an electric motor 27, attached to a carrying means 28. The shaft 23 is provided with a torque limiting recess, in the form of a turned cavity 29, which bursts when the clamping elements 5¹, 7¹ have been brought together around a line 26 with the desired torque. The correct position of the device for the clamping elements 5¹, 7¹ to grasp the line 26 is indicated by two contact means 30, 31 provided at a mutual horizontal distance in a yoke 32, which is part of the carrying means 28. The carrying means is also provided with four guide bars 33, 34, 35, 36 which facilitate the orientation of the device relative to the line for mounting the marking body.

Different constructions are possible for releasing the carrying means 28 from the fastening device. In this case, the carrying means is designed with a vertical rod 37, which is in carrying connection with the third frame portion 22 through a guide bar 38, formed to maintain the carrying connection, until the third frame portion 22 has reached a second position, whereupon the rod 37 is released from the guide bar 38. In this second position, the shaft 23 is also broken from the electric motor 27, and the carrying means 28 can be lifted away from the marking body. A signal from the contact means 30, 31 can be utilized in a variety of ways. The signal may cause the motor 27 to start. It is also possible, via a releasable connection to a carrying means, such as a helicopter, to let a signal give notice to an operator that the device is in the correct position so that the operator may start the motor 27. In the present case, the driving force of the motor comes from batteries 39, 40 located at the ends of the guide bars 34, 36.

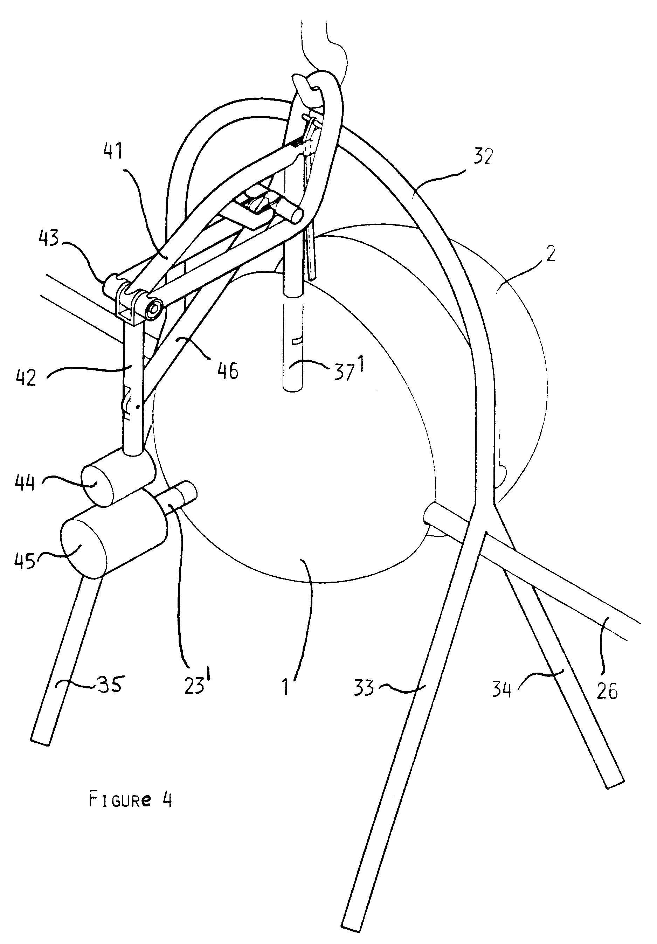

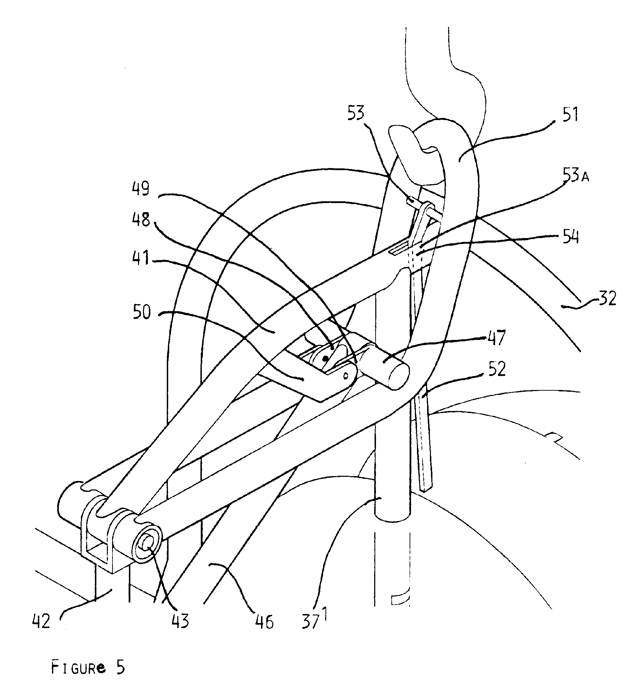

In figures 4 and 5 there is shown an alternative embodiment of a device according to the invention, which enables a turning means, especially an electric motor, to be released from a turnable shaft, provided to pull the clamping means together without having to break the shaft. For the sake of clarity, some required constructional parts have been omitted in the figure. It is understood that the expert realizes the need for these.

Here too, the carrying means comprises a vertical rod 37¹, cooperating in carrying connection with a guide bar 38, which is not shown. The function is the same as that described for the embodiment in figure 3. The yoke 32 of the carrying.means guides firmly connected to a rod 41, which carries the vertical rod 37¹. A the end of the rod 41 a fourth link arm 42 is pivoted around an axis 43. The link arm 42 carries a driving means consisting of two electric motors, a first motor 44 with a relatively high rotational speed, and a second motor 45 with a relatively low rotational speed, the latter having a higher torque than the former. The motor 45 is provided with a free wheel, which is driven by the high speed motor 44 with a driving belt as long as the shaft 23¹, coupled to the free wheel, does not make too high torque load. As soon as the clamping elements have gotten in contact with the line, the torque load of the shaft 23¹ is increased, and the slower motor 45 takes over the turning operation, which can be limited either by an electrical switch which breaks the current at a certain predetermined maximum electric current, or may be limited by a torque limiting recess at the shaft 23¹ as described above. In this case the motor 45 is provided with a releasable coupling to the shaft 23¹, so that the motor 45 is released from the shaft 23¹ if the fourth link arm 42 is swung out. This is achieved in that the fourth link arm 42 is acted upon by a fifth link arm 46, pivoted in the fourth link arm 42, and at its other end pivoted in a perpendicular shaft dowel 47, which in turn is provided with two short sixth and seventh link arms 48, 49, pivoted in a protrusion 50 at the under side of the rod 41. In a starting position, corresponding to said first position of the clamping elements 5, 7, the shaft dowel 47 rests upon a yoke arm 51, which at one end is pivoted around said axis 43, and at its other end is formed like a loop, which is carried by a carrying means, such as a helicopter. In this position the fourth link arm 42 is in its inner position, and the motor 45 is connected to the shaft 23¹. The yoke arm 51 is locked in this position by a locking means, comprising an eighth link arm 52, which at its upper end is pivoted around an axis 53 in the yoke arm 51. The eighth link arm 52 is provided with a protrusion 53, co-operating with a corresponding protrusion 54 at the rod 41. The eighth link arm 52 extends downwards between the two hemispheres 1, 2. In a position corresponding to said second position of the clamping elements 5, 7, the second hemisphere 2 hits the eighth link arm 52, and the yoke arm 52 is released to swing upwards, whereupon the shaft dowel 47 is lifted upwards, turning so that the fifth link arm 46 pushes the fourth link arm 42, releasing the motor 45 from the shaft 23¹. In this second position the rod 37¹ is released from the guide bar 38, which is not shown, and the carrying means may be lifted from the remaining marking body, which is now fastened to the line 26.

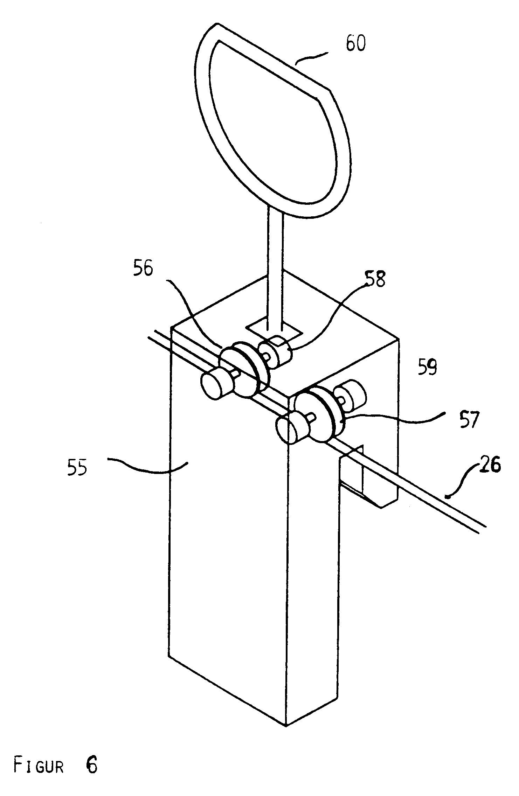

A reference carriage for marking the correct positions on the line for fastening marking bodies is shown in figure 6. It comprises a house 55, formed to be hung on a line 26. It comprises driving wheels 56 and measuring wheels 57, a driving means designated by 58 and a measurement transmitter 59. A clamp 60 is provided for carrying the reference carriage. This is provided with equipment, not shown, for wireless communication, e.g. through IR radiation. It is arranged to start on an impulse and move a predetermined distance along the line 26.

## Claims

1. A device for achieving visual marking of a line or wire, especially a substantially horizontal ground wire in a transfer system for high voltage electricity, arranged at a relatively high altitude above the ground, the device including
a shell (1, 2) and a carrying means (17, 28), carried by a lifting device, such as a helicopter, crane etc., CHARACTERISED IN THAT said
shell carries a fastening device (3), comprising clamping elements (5, 7, 5′, 7′), moveable between a first position and a second position and provided to grasp the line freely, when said clamping elements are in said first position, and to grasp the line fasteningly, when said clamping elements are in said second position, and in that said
carrying means carries the fastening device (3) when said clamping elements are in said first position, and is arranged to be released from the fastening device (3) when said clamping elements are in said second position,
so that said shell (1, 2), in the form of a marking body, remains attached to said line, free from the carrying means (17).

2. A device according to claim 1, **characterized** in that the shell is formed like a sphere, divided into two substantially identical hemispheres (1, 2).

3. A device according to claim 1 or 2, **characterized** in that the fastening device (3) is provided with indicating means (9,10,15) for indicating the correct position of the fastening device relative to the line, for the clamping elements to grasp the line, cooperatingly.

4. A device according to claim 1 or 2, **characterized** in that the carrying means (28) is provided with indicating means (30, 31) for indicating the correct position of the fastening device relative to the line, for the clamping elements (5, 7), to grasp the line (26), cooperatingly.

5. A device according to claim 4, **characterized** in that said indicating means comprise two contact means (30, 31) or sensors, arranged at a mutual horizontal distance to give a signalupon simultaneous contact with the line (26).

6. A device according to any one of claims 1 to 3, **characterized** in that the fastening device (3) comprises a first frame portion (4), which in its lower part is formed as a first clamping element (5), and a first link arm (6) in the form of a yoke, pivoted in the frame portion (4), the yoke being formed on the inside as a second clamping element (7), the first link arm (6) being attached at its portion turned away from the second clamping element (7), to a relatively strong spring means (8), which pretensions said clamping elements (5, 7) towards said second position fasteningly grasping the line, but being kept in said first position by a link arrangement (9, 10), which when touching the line releases said first link arm (6), so that the clamping elements (5, 7) go to their second position.

7. A device according to claim 6, **characterized** in that said carrying means (17) is provided, releasably in the fastening device (3), in said first position the carrying means (17) being locked by a protrusion (19) on the first link arm (6) when said clamping elements are in said first position, and being released from the fastening device (3) when said clamping elements are in said second position.

8. A device according to claim 6, in which the shell is formed like a sphere, divided into two substantially identical hemispheres (1, 2), **characterized** in that one hemisphere is attached to said fastening device (3) and the other hemisphere is pivoted at its upper part in the fastening device (3), the second hemisphere (2), via a second link arm (17a), being kept swung out from the first hemisphere (1) by the first link arm (6) when said clamping elements are in said first position, but being kept closed to the first hemisphere (1) when said clamping elements are in said second position.

9. A device according to any one of claims 1 to 8, **characterized** in that the carrying means (28) is connected to at least two, preferably four guide bars (33, 34, 35, 36), provided to guide the fastening device to the correct position relative to the line (26), when the device is approaching the line, for the clamping elements (5¹, 7¹) to grasp the line (26) fasteningly, cooperatingly.

10. A device according to any one of claims 1,2,4,5 and 9, **characterized** in that said fastening device comprises a second frame portion (21), carrying a first clamping element (5¹), preferably formed as a profile piece, for grasping part of the circumference of the line, further comprising a third frame portion (22), carrying a second clamping element (7¹), formed like the first clamping element (5¹), a turnable shaft (23, 23²) being so arranged that on turning by a driving means (27, 44, 45), it brings the two frame portions together, so that the clamping elements (5¹, 7¹) from either side, cooperatingly grasp the line (26), fastening it.

11. A device according to claim 10, **characterized** in that said shaft (23, 23¹) is provided with a torque limiting means, preferably in the form of an axially limited rotation symmetrical recess (29) of its diameter.

12. A device according to claim 10 or 11, **characterized** in that said driving means comprises an electric motor (27).

13. A device according to any one of claims 10 to 12, **characterized** in that the turnable shaft (23¹) is aranged to be turned by a driving means with a relatively high first speed of rotation and low torque, and a relatively low second speed of rotation and high torque (44, 45).

14. A device according to any one of claims 10 to 13, **characterized** in that said driving means (44, 45) stands in carrying connection with the carrying means, through a link arrangement (41-43, 46-54) and is releasable from the turnable shaft (23¹) in said second position of the clamping elements (5¹, 7¹)

15. A device according to any one of claims 1 to 14, in combination with a reference carriage, which is provided with driving wheels (56) and its own driving means (58), for displacement along said line to give the positions for fastening the marking bodies, the reference carriage being arranged to be started on a wirelessly transferred impulse, e.g. through IR radiation.

## Patentansprüche

1. Einrichtung zur sichtbaren Positionsangabe einer Leitung oder eines Kabels, insbesondere eines im wesentlichen horizontalen Grundkabels in einem Übertragungssystem für elektrische Hochspannung, das in einer relativ großen Höhe über dem Boden angeordnet ist, wobei die Einrichtung eine Kapsel (1, 2) und ein Trägermittel (17) umfaßt, das durch eine Hebevorrichtung wie eines Hubschraubers, eines Kranes oder dergleichen anhebbar ist, dadurch gekennzeichnet, daß die Kapsel (1, 2) eine Befestigungseinrichtung (3) trägt, die Klemmelemente (5, 5′, 7, 7′) umfaßt, die zwischen einer ersten Stellung und einer zweiten Stellung bewegbar sind und dazu dienen, die Leitung frei zu ergreifen, wenn sich die Klemmelemente in besagter erster Stellung befinden, und die Leitungen fest zu ergreifen, wenn sich die Klemmelemente in besagter zweiter Stellung befinden, daß das Trägermittel die Befestigungseinrichtung (3), wenn sich die Klemmelemente in besagter erster Stellung befinden, trägt, und von der Befestigungseinrichtung (3) gelöst wird, wenn sich die Klemmelemente in der besagten zweiten Stellung befinden, so daß die Kapsel (1, 2) in Form eines Markierungskörpers frei vom Trägermittel (17) auf der Leitung befestigt verbleibt.

2. Einrichtung nach Anspruch 1, dadurch gekennzeichnet, daß die Kapsel wie eine Kugel geformt ist und in zwei im wesentlichen identische Halbkugeln (1, 2) unterteilt ist.

3. Einrichtung nach Anspruch 1 oder 2, dadurch gekennzeichnet, daß die Befestigungseinrichtung (3) mit Anzeigemitteln (9, 15, 19) zur Anzeige der richtigen Stellung der Befestigungseinrichtung relativ zur Leitung versehen ist, damit die Klemmelemente die Leitung zusammenwirkend ergreifen.

4. Einrichtung nach Anspruch 1 oder 2, dadurch gekennzeichnet, daß das Trägermittel (28) mit Anzeigemitteln (30, 31) zur Anzeige der richtigen Stellung der Befestigungseinrichtung relativ zur Leitung versehen ist, damit die Klemmelemente (5, 7) die Leitung (26) zusammenwirkend ergreifen.

5. Einrichtung nach Anspruch 4, dadurch gekennzeichnet, daß die Anzeigemittel zwei Kontaktmittel (30, 31) oder Sensoren umfassen, die in einem gegenseitigen horizontalen Abstand angeordnet sind, um ein Signal nach gleichzeitigem Kontakt mit der Leitung (26) zu liefern.

6. Einrichtung nach einem der Ansprüche 1 bis 3, dadurch gekennzeichnet, daß die Befestigungseinrichtung (3) ein erstes Rahmenteil (4) umfaßt, das in seinem unteren Teil als ein ersten Klemmelement (5) ausgebildet ist, und einen ersten Gelenkarm (6) in Form eines Jochs, der drehbar im Rahmenteil (4) ausgebildet ist, wobei das Joch an der Innenseite eines zweiten Klemmelements (7) befestigt ist, daß der erste Gelenkarm (6) in seinem vom zweiten Gelenkelement (7) weggedrehten Teil mittels eines verhältnismäßig starken Federmittels festgehalten wird, das Klemmelemente (5, 7) auf die zweite Stellung zum festen Ergreifen der Leitung verspannt, aber in der ersten Stellung mittels einer Gelenkarmanordnung (9, 10) gehalten wird, die, wenn sie die Leitung berührt, den ersten Gelenkarm (6) losläßt, so daß die Klemmelemente in ihre zweite Stellung gehen.

7. Einrichtung nach Anspruch 6, dadurch gekennzeichnet, daß das Trägerelement (17) lösbar in der Befestigungseinrichtung (3) angeordnet ist, wobei in der ersten Stellung das Trägermittel (17) durch einen Vorsprung (19) auf dem ersten Gelenkarm (6) verriegelt ist, wenn sich die Klemmelemente in der ersten Stellung befinden, und das freigegeben wird von der Befestigungseinrichtung (3), wenn die Klemmelemente sich in der zweiten Stellung befinden.

8. Einrichtung nach Anspruch 6, bei der die Kapsel wie eine Kugel geformt ist, die in zwei im wesentlichen identische Halbkugeln ( 1, 2) unterteilt ist, dadurch gekennzeichnet, daß eine der Halbkugeln an der Befestigungseinrichtung (3) befestigt ist, wobei die andere Halbkugel in ihrem oberen Teil in der Befestigungseinrichtung (3) drehbar ist, und daß die zweite Halbkugel (2) über einen zweiten Gelenkarm (17a) durch den ersten Gelenkarm (6) von der ersten Halbkugel weg nach außen geschwenkt gehalten wird, wenn die Klemmelemente sich in der ersten Stellung befinden, die aber geschlossen mit der ersten Halbkugel (1) gehalten wird, wenn die Klemmelemente sich in der zweiten Stellung befinden.

9. Einrichtung nach einem der Ansprüche 1 bis 8, dadurch gekennzeichnet, daß das Trägermittel (28) mit wenigstens zwei, vorzugsweise vier Führungsstangen (33, 34, 35, 36), verbunden ist, die zur Führung der Befestigungseinrichtung in eine ordnungsgemäße Stellung relativ zur Leitung (26) dienen, wenn die Einrichtung sich der Leitung nähert, damit die Klemmelemente (5¹, 7¹) die Leitung (26) gemeinsam fest ergreifen.

10. Einrichtung nach einem der Ansprüche 1, 2, 4, 5 und 9, dadurch gekennzeichnet, daß die Befestigungseinrichtung ein zweites Rahmenteil (21) umfaßt, das ein erstes Klemmelement (51) trägt und das vorzugsweise als Profilstück zum Ergreifen eines Teils des Kreisumfanges der Leitung ausgebildet ist, und ein drittes Rahmenteil (21), das ein zweites Klemmelement (7¹) trägt, das wie das erste Klemmelement (5¹) ausgebildet ist, sowie eine drehbare Welle (23, 23¹), mittels der aufgrund ihrer Drehung über eine Antriebsreinrichtung (27, 44, 45) die beiden Rahmenteile zusammengeführt wurden, so daß die Klemmelemente (5¹, 7¹) von beiden Teilen gemeinsam die Leitung (26) ergreifen und sie festhalten.

11. Einrichtung nach Anspruch 10, dadurch gekennzeichnet, daß die Welle (23) mit einer Drehmomentbegrenzungseinrichtung versehen ist, vorzugsweise in Form eines axial begrenzten rotationssymmetrischen Absatzes (29) in seinem Durchmesser.

12. Einrichtung nach Anspruch 10 oder 11, dadurch gekennzeichnet, daß das Antriebsmittel einen Elektromotor (27) umfaßt.

13. Einrichtung nach einem der Ansprüche 10 bis 12, dadurch gekennzeichnet, daß die drehbare Welle (23¹) durch eine Antriebseinrichtung mit einer verhältnismäßig hohen ersten Drehgeschwindigkeit und geringem Drehmoment und einer verhältnismäßig niedrigen Drehgeschwindigkeit und hohem Drehmoment (44, 45) gedreht werden kann.

14. Einrichtung nach einem der Ansprüche 10 bis 13, dadurch gekennzeichnet, daß die Antriebseinrichtung (44, 45) in Hebeverbindung über eine Gelenkanordnung (41-43, 46-54) mit der Hebeeinrichtung steht und die von der drehbaren Welle (23¹) in der zweiten Stellung der Klemmelemente (5¹, 7¹) lösbar ist.

15. Einrichtung nach einem der Ansprüche 1 bis 14 in Verbindung mit einem Bezugsgefährt, das mit Antriebsrädern (56) und einer eigenen Antriebseinrichtung (58) zum Verfahren längs der Leitung versehen ist, um Positionen für die Befestigung der Markierungskörper zu liefern, wobei das Bezugsgefährt derart ausgestaltet ist, das es aufgrund drahtlos übertragener Impulse, beispielsweise mittels Infrarotwellen, in Betrieb gesetzt werden kann.

## Revendications

1. Dispositif pour fournir un repère visuel d'une ligne ou d'un câble, spécialement d'un câble de mise à la terre sensiblement horizontal appartenant à une installation de transfert pour courants électriques à haute tension, disposé à une altitude relativement élevée par rapport au sol, ce dispositif comprenant
une enveloppe (1, 2) et un moyen porteur (17, 28), porté par un dispositif de levage tel qu'un hélicoptère, une grue, etc.,
caractérisé en ce que ladite enveloppe porte un dispositif de fixation (3), comprenant des éléments de serrage (5, 7, 5′, 7′) mobiles entre une première position et une deuxième position et prévus pour saisir la ligne librement quand lesdits éléments de serrage sont dans ladite première position, et pour saisir la ligne fixement quand lesdits éléments de serrage sont dans ladite deuxième position,
et en ce que ledit moyen porteur porte le dispositif de fixation (3) quand lesdits éléments de serrage sont dans ladite première position, et est disposé de manière à être libéré du dispositif de fixation (3) quand lesdits éléments de serrage sont dans ladite deuxième position,
de sorte que ladite enveloppe (1, 2), sous la forme d'un corps de repérage, reste fixée à ladite ligne, libérée du moyen porteur (17).

2. Dispositif selon la revendication 1, caractérisé en ce que l'enveloppe est formée comme une sphère, divisée en deux hémisphères (1, 2) sensiblement identiques.

3. Dispositif selon la revendication 1 ou 2, caractérisé en ce que le dispositif de fixation (3) est muni de moyens indicateurs (9, 10, 15) pour indiquer sa position correcte par rapport à la ligne, afin que les éléments de serrage saisissent cette dernière, de façon coopérante.

4. Dispositif selon la revendication 1 ou 2, caractérisé en ce que le moyen porteur (28) est muni de moyens indicateurs (30, 31) pour indiquer la position correcte du dispositif de fixation par rapport à la ligne, afin que les éléments de serrage (5, 7) saisissent cette dernière (26), de façon coopérante.

5. Dispositif selon la revendication 4, caractérisé en ce que lesdits moyens indicateurs comprennent deux moyens de contact (30, 31) ou capteurs, disposés à une distance mutuelle horizontale afin de donner un signal lors d'un contact simultané avec la ligne (26).

6. Dispositif selon l'une quelconque des revendications 1 à 3, caractérisé en ce que le dispositif de fixation (3) comprend une première partie de structure (4) qui, dans sa partie inférieure, est formée comme un premier élément de serrage (5), et un premier bras articulé (6) sous la forme d'un joug, qui pivote dans la partie de structure (4), le joug étant formé en dedans, comme un deuxième élément de serrage (7), le premier bras articulé (6) étant fixé sur sa partie détournée du deuxième élément de serrage (7), à un moyen formant ressort relativement résistant (8), qui met en précontrainte lesdits éléments de serrage (5, 7) vers ladite deuxième position saisissant la ligne fixement, mais en étant maintenu dans ladite première position par un mécanisme articulé (9, 10), qui, lorsqu'il touche la ligne, libère ledit premier bras articulé (6), de sorte les éléments de serrage (5, 7) vont vers leur deuxième position.

7. Dispositif selon la revendication 6, caractérisé en ce que ledit moyen porteur (17) est conçu de façon libérable dans le dispositif de fixation (3), dans ladite première position, le moyen porteur (17) étant bloqué par une saillie (19) se trouvant sur le premier bras articulé (6) lorsque lesdits éléments de serrage sont dans ladite première position et étant libéré du dispositif de fixation (3) lorsque lesdits éléments de serrage sont dans ladite deuxième position.

8. Dispositif selon la revendication 6, dans lequel l'enveloppe est formée comme une sphère, divisée en deux hémisphères (1, 2) sensiblement identiques, caractérisé en ce qu'un hémisphère est fixé audit dispositif de fixation (3) et que l'autre hémisphère pivote à sa partie supérieure dans le dispositif de fixation (3), le deuxième hémisphère (2), par l'intermédiaire d'un deuxième bras articulé (17a), étant maintenu écarté par pivotement du premier hémisphère (1) par le premier bras articulé (6) lorsque lesdits éléments de serrage sont dans ladite première position, mais étant maintenu fermé sur le premier hémisphère (1) lorsque lesdits éléments de serrage sont dans ladite deuxième position.

9. Dispositif selon l'une quelconque des revendications 1 à 8, caractérisé en ce que le moyen porteur (28) est relié à au moins deux, de préférence quatre, barres de guidage (33, 34, 35, 36), prévues pour guider le dispositif de fixation vers la position correcte par rapport à la ligne (26), quand le dispositif s'approche de cette dernière, afin que les éléments de serrage (5¹, 7¹) saisissent fixement la ligne (26), de façon coopérante.

10. Dispositif selon l'une quelconque des revendications 1, 2, 4, 5 et 9, caractérisé en ce que ledit dispositif de fixation comprend une deuxième partie de structure (21) portant un premier élément de serrage (5¹), formé de préférence comme une pièce profilée, destiné à saisir une partie de la circonférence de la ligne, comprenant en outre une troisième partie de structure (22), portant un deuxième élément de serrage (7¹), formé comme le premier élément de serrage (5¹), un arbre rotatif (23, 23¹) étant disposé de telle sorte qu'en tournant grâce à un moyen d'entraînement (27, 44, 45) il réunit les deux parties de structure, de sorte que les éléments de serrage (5¹, 7¹), de chaque côté, saisissent la ligne (26) de façon coopérante, en la fixant.

11. Dispositif selon la revendication 10, caractérisé en ce que ledit arbre (23, 23¹) est muni d'un moyen de limitation de couple, de préférence sous la forme d'une cavité (29) symétrique, de rotation limitée axialement, de son diamètre.

12. Dispositif selon la revendication 10 ou 11, caractérisé en ce que ledit moyen d'entraînement comprend un moteur électrique (27).

13. Dispositif selon l'une quelconque des revendications 10 à 12, caractérisé en ce que l'arbre rotatif (23¹) est disposé de façon à tourner à l'aide d'un moyen d'entraînement avec une première vitesse de rotation relativement grande et un faible couple et avec une deuxième vitesse de rotation relativement petite et un couple élevé (44, 45).

14. Dispositif selon l'une quelconque des revendications 10 à 13, caractérisé en ce que ledit moyen d'entraînement (44, 45) se trouve dans une liaison porteuse avec le moyen porteur, par l'intermédiaire d'un mécanisme articulé (41 à 43, 46 à 54) et peut être libéré de l'arbre rotatif (23¹) dans ladite deuxième position des éléments de serrage (5¹, 7¹).

15. Dispositif selon l'une quelconque des revendications 1 à 14, en association avec un chariot de référence, qui est muni de roues motrices (56), et de son propre moyen d'entraînement (58), afin de se déplacer le long de ladite ligne pour donner les positions de fixation des corps de repérage, le chariot de référence étant disposé pour démarrer avec une impulsion transmise sans fil, par exemple par rayonnement infrarouge.
